# EUROPEAN PATENT SPECIFICATION

(11) **EP 1 813 880 B1**
(45) Date of publication and mention of the grant of the patent: **21.10.2009**
(21) Application number: 07250303.0
(22) Date of filing: 25.01.2007
(51) Int. Cl.: F24F 13/28, F24F 1/00

(54) **Indoor unit of air conditioner**
Innenraumeinheit einer Klimaanlage
Unité d'intérieur pour climatiseur

(30) Priority: 26.01.2006 KR 20060008339; 10.02.2006 KR 20060013000
(43) Date of publication of application: 01.08.2007
(73) Proprietor: LG Electronics Inc., Youngdungpo-ku Seoul 150-721 (KR)
(72) Inventor: Park, Hyon Chel, Sammoon-ri Jangyoo-myun Kimhae-si Kyungsangnam-do (KR)
(74) Representative: Palmer, Jonathan R.

(56) References cited:
- EP-A- 1 703 222
- EP-A1- 1 087 183
- EP-A1- 1 376 024
- WO-A-02/086393
- JP-A- 2005 083 721

## Description

### Field of the Invention

The present invention relates to an indoor unit of an air conditioner, and more particularly, to an indoor unit of an air conditioner that includes a support part supporting a heat exchanger while collecting condensed water falling from the heat exchanger and an air purifying filter capable of being automatically drawn out.

### Description of the Related Art

In general, an air conditioner is a device for maintaining indoor air at the optimal condition. In the summer, an air conditioner blows cooled wind to cool heated indoor air. In the winter, the air conditioner blows warmed wind to warm cooled indoor air.

That is, an air conditioner is a cooling/warming device that is installed in an indoor space (e.g., vehicles, offices, and houses) to cool/warm indoor air by providing a cooling cycle including a compressor, an outdoor heat exchanger, an expansion valve, and an indoor heat exchanger.

Air conditioners can be broadly classified into a separation-type air conditioner and an integral-type air conditioner. In the separation-type air conditioner, an outdoor unit and an indoor unit are separated from each other. In the integral-type air conditioner, an outdoor unit and an indoor unit is united in a body. The separation-type air conditioner can be further classified into a package-type air conditioner, a wall-type air conditioner, and a ceiling-type air conditioner.

When heat exchangers are disposed at top and bottom sides to enhance the heat exchange performance of an indoor unit of a conventional air conditioner, the indoor unit cannot be slimmed and condensed water is difficult to process.

Furthermore, since a filter of the conventional indoor unit must be manually replaced by a user, the filter is difficult to replace. In addition, the filter is liable to be damaged by the replacement.

EP 1,376,024 describes an air conditioner with a sliding device for sliding in a filter from the front of the air conditioner.

### SUMMARY OF THE INVENTION

Accordingly, the present invention is directed to an indoor unit of an air conditioner that addresses one or more problems due to limitations and disadvantages of the related art.

It would be desirable to provide an indoor unit of an air conditioner that can support a heat exchanger and also can easily process condensed water falling from the heat exchanger.

It would also be desirable to provide an indoor unit of an air conditioner whose filter can be automatically drawn out in a simple operation, thereby facilitating the attachment/detachment of the filter.

Additionally, it would be desirable to provide an indoor unit of an air conditioner, in which a filter can be rapidly installed and drawn through a side air inlet in a sliding manner.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

In accordance with an aspect of the present invention there is provided an indoor unit of an air conditioner according to the accompanying claims.

An indoor unit of an air conditioner, including: a main body including one or more air inlets and one or more air outlets formed thereat; a filter disposed in the main body to purify air intaken through the air inlet; a heat exchanger disposed in the main body; and a support part supporting the bottom of the heat exchanger and collecting condensed water falling from the heat exchanger.

According to the present invention, the supporting of the heat exchanger and the collecting of the condensed water can be implemented in one simplified structure, thereby making it possible to reduce the fabrication cost of the indoor unit.

In addition, the filter of the indoor unit can be drawn out automatically, thereby making it possible to replace and install the filter easily and rapidly.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a perspective view of an indoor unit of an air conditioner according to an embodiment of the present invention;
Fig. 2 is a cross-sectional view of an indoor unit of an air conditioner according to an embodiment of the present invention;
Fig. 3 is a front view of an indoor unit of an air conditioner according to an embodiment of the present invention, which illustrates the interior of the indoor unit;
Fig. 4 is a perspective view illustrating a situation where a filer is automatically drawn from an indoor unit of an air conditioner according to an embodiment of the present invention;
Fig. 5 is a perspective view illustrating a situation where a filter is locked by a filter locking unit according to a first embodiment of the present invention;
Fig. 6 is a perspective view illustrating a situation where the filter is unlocked by the filter locking unit of Fig. 5;
Fig. 7 is a perspective view illustrating a situation where a filter is locked by a filter locking unit according to a second embodiment of the present invention;
Fig. 8 is a perspective view illustrating a situation where the filter is unlocked by the filter locking unit of Fig. 7;
Fig. 9 is a perspective view illustrating a situation where a filter is locked by a filter locking unit according to a third embodiment of the present invention; and
Fig. 10 is a perspective view illustrating a situation where the filter is unlocked by the filter locking unit of Fig. 9.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

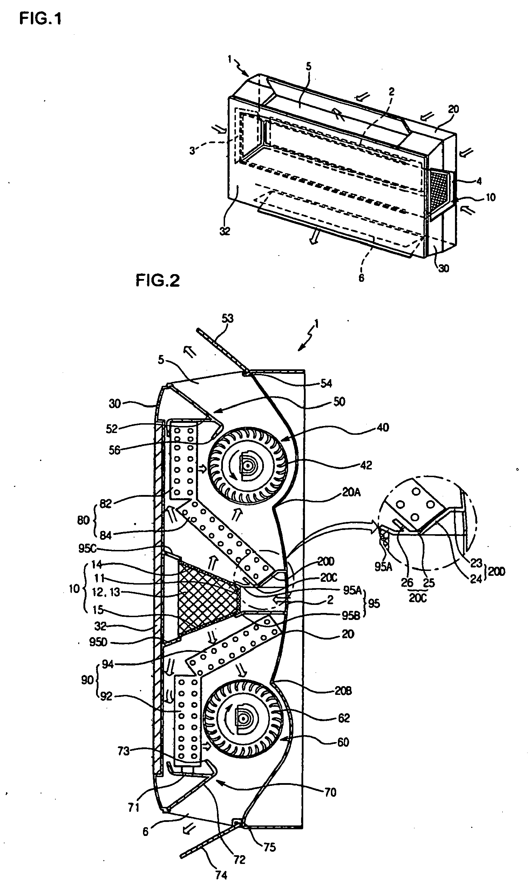

Fig. 1 is a perspective view of an indoor unit of an air conditioner according to an embodiment of the present invention.

Referring to Fig. 1, an indoor unit of an air conditioner according to the present invention includes a main body 1 constituting an appearance of the indoor unit. Air inlets 2, 3 and 4 for intaking indoor air and air outlets 5 and 6 for discharging conditioned air are formed at the main body 1.

The air inlets 2, 3 and 4 may be formed at at least one of front, rear, left and right sides of the main body 1.

The main body 1 may include a chassis 20 supporting an interior of the indoor unit, a front frame 30 disposed at a front side of the chassis 20, and a front panel 32 disposed at a front side of the front frame 30.

The front panel 32 may be a picture frame containing a picture and the like, or a color panel whose color can be changed. Alternatively, the front panel 32 may be constructed to include a display such as an LCD so that it can be designed to have a graceful appearance.

The chassis 20 may be hung and mounted on an installation plate (not shown) that is mounted on an indoor wall surface using a fixing member such as a screw.

The chassis 20 has a separate air intake flow channel for intaking, through the rear air inlet 2, indoor air between the chassis 20 and the indoor wall surface or the installation plate.

A filter 10 is disposed in the main body 1 to purify air that is intaken into the main body 1 through at least one of the rear air inlet 2 and the side air inlets 3 and 4.

Fig. 2 is a cross-sectional view of an indoor unit of an air conditioner according to an embodiment of the present invention.

Referring to Fig. 2, the main body 1 has the rear air inlet 2 formed at its rear side, left/right air inlets 3 and 4 formed at its left/right sides, and top/bottom air outlets 5 and 6 formed at its top/bottom sides.

The filter 10 may include a rear filter 11 that is disposed against the rear air inlet 2 to purity air that is intaken through the rear air inlet 2.

The filter 10 may further include left/right filters 12 and 13 that are disposed respectively against the left/right air inlets 3 and 4 to purify air that is intaken through the left/right air inlets 3 and 4.

The filter 10 may further include a top filter 14 and a bottom filter 15 that are disposed respectively on the top and bottom of the rear/left/right filters 11, 12 and 13.

The filter 10 is smaller in size than the left/right air inlets 3 and 4 so that it can be drawn horizontally through the left/right air inlets 3 and 4.

The following description is made on the assumption that the filter 10 is drawn through the right air inlet 4 of the main body 1.

The chassis 20 is formed so that a top flow channel guide 20A forming a flow channel of a top blower fan 42 and a bottom flow channel guide 20B forming a flow channel of a bottom blower fan 62 are protruded forward.

A drain part 20C protrudes from the chassis 20 to drain condensed water falling from a top heat exchanger 80. A heat exchanger support 20D may be formed at the drain part 20C to support the bottom of the top heat exchanger 80 at a slope.

The heat exchanger support 20D may be constructed to include a horizontal part 23 protruding from the chassis 20 and an inclined part 24 supporting an inclined heat exchange part 84.

The drain part 20C may be constructed to include a horizontal part 25 extending from the inclined part 24 of the heat exchanger support 20D and an inclined part 26 formed in parallel to the inclined heat exchange part 84 to collect condensed water.

A filter guide 95 extends from the heat exchanger support 20D to support the filter 10.

The filter guide 95 includes rear guides 95A and 95B extending from the heat exchanger support 20D to support the rear of the filter 10 and front guides 95C and 95D extending from the inside of the main body 1 to support the front of the filter 10.

The filter guide 95 supports the front and rear of the filter 10 and guides the filter 10 so that that the filter 10 can be slid and drawn through the right air inlet 4.

The main body 1 further includes top/bottom blowers 40 and 60 for intaking air through the rear air inlet 2 and the left/right air inlets 3 and 4 and discharging air through the top/bottom air outlets 5 and 6, and top/bottom discharge parts 50 and 70 for discharging air in the main body 1 outside.

The top/bottom blowers 40 and 60 include top/bottom blower fans 42 and 62, which are cross flow fans disposed horizontally at the top and bottom of the chassis 20, and a top motor (not shown) for rotating the top/bottom blower fans 42 and 62.

The top/bottom discharge parts 50 and 70 may include top/bottom dischargers 52 and 72 constituting the top/bottom air outlets 5 and 6.

The top/bottom air outlets 5 and 6 may include top/bottom wind direction adjusting members 53 and 74 for guiding heat-exchanged air and adjusting a wind direction, and top/bottom wind direction adjusting motors 54 and 75 for rotating the top/bottom wind direction adjusting members 53 and 74.

The top/bottom dischargers 52 and 72 may include stabilizers 53 and 73 for separating the intake/discharge flow channels of the top blower fan 42.

The main body 1 may further include therein a top heat exchanger 80 for heat-exchanging coolants with air intaken toward the top blower fan 42, and a bottom heat exchanger 90 for heat-exchanging coolants with air intaken toward the bottom blower fan 62.

The top heat exchanger 80 and the bottom heat exchanger 90 are vertically spaced apart from each other in the main body 1 with the filter 10 centered therebetween.

The top/bottom heat exchangers 80 and 90 are disposed respectively at the top and bottom of the filter 10 so that air having passed through the filter 10 is heat-exchanged before being intaken through the top/bottom blower fans 42 and 62.

The top heat exchanger 80 is constructed to include a top vertical heat exchange part 82 that are arranged vertically, and a top inclined heat exchange part 84 that are extended from the bottom end of the top vertical heat exchange part 82 and inclined toward the center of the chassis 20.

The bottom heat exchanger 90 is constructed to include a bottom vertical heat exchange part 92 that are arranged vertically, and a bottom inclined heat exchange part 94 that are extended from the top end of the bottom vertical heat exchange part 92 and inclined toward the center of the chassis 20.

The bottom end of the bottom vertical heat exchange part 92 may be mounted and supported on a drain part 71 of the bottom discharger 72.

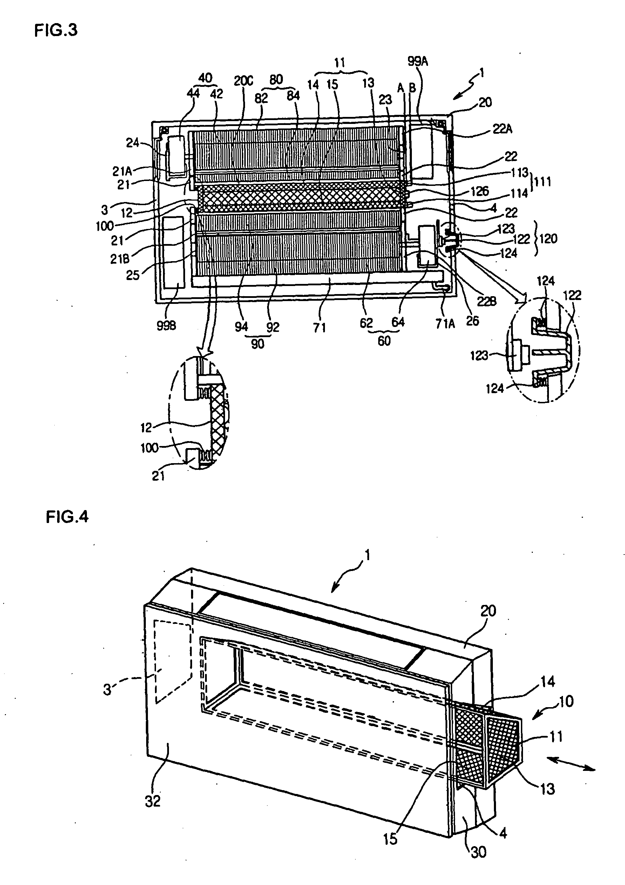

Fig. 3 is a front view of an indoor unit of an air conditioner according to an embodiment of the present invention, which illustrates the interior of the indoor unit.

Referring to Fig. 3, in the chassis 20, a left partition wall 21 protrudes to block the left of the top/bottom blower fans 42 and 62, and a right partition wall 22 protrudes the right of top/bottom blower fans 42 and 62.

In the main body 1, motor seating parts 24 and 26 are provided to support the top and bottom motors 44 and 54. In the partition walls 21 and 22, bearings 23 and 25 are installed to support the rotation axes of the blower fans 42 and 52 in a rotatable manner.

A left top supporter 21A and a left bottom supporter 21B are coupled with the left partition wall 21. The left top supporter 21A is disposed at the top front of the left partition wall 21 to form the left flow channel of the top blower fan 42 in combination with the left partition wall 21. The left bottom supporter 21B is disposed at the bottom front of the left partition wall 21 to form the left flow channel of the bottom blower fan 62 in combination with the left partition wall 21.

Likewise, a right top supporter 22A and a right bottom supporter 22B are coupled with the right partition wall 22. The right top supporter 22A is disposed at the top front of the right partition wall 22 to form the right flow channel of the top blower fan 42 in combination with the right partition wall 22. The right bottom supporter 22B is disposed at the bottom front of the right partition wall 22 to form the right flow channel of the bottom blower fan 62 in combination with the right partition wall 22.

In the indoor unit of the air conditioner, condensed water having fallen from the top heat exchanger 80 onto the drain part 20C of the chassis 20 falls through a separate drain flow channel onto the drain part 71 of the bottom discharge part 70.

The condensed water collected at the drain part 71 may flow outside the main body 1 through a drain hose 71A connected to the drain part 71.

In the main body 1, a filter pressing member 100 is installed to push the filter 10 in the filter drawing direction and a locking unit 110 is installed to lock/unlock the drawing of the filter 10.

The filter pressing unit 110 may be a spring that is installed in the main body 1 to elastically support the filter 10 in the filter drawing direction. The spring may be installed opposite to a location through which the filter is drawn. In addition, a plurality of the springs may be provided spaced apart from one another.

The locking unit 110 may be constructed to include a filter locker 111 for locking/unlocking the filter 10, and a filter locker driving unit 120 for driving the filter locker 111.

The filter locker 111 locks the filter 10 so that the filter 10 is not pushed sideways by the pushing force of the filter pressing member 100. To this end, the filter locker 111 may be slid or rotated between a locked location A and an unlocked location B of the filter 10.

The filter locker driving unit 120 may be constructed to include a button 122 and a motor 126 that has a rotation axis connected to the filter locker 111. When the button 122 is pressed, the motor 126 is driven to pivot the filter locker 111.

The button 122 may be controlled by a remote controller that remotely controls the indoor unit of the air conditioner.

A tact switch 123 is provided beside the button 122 in such a way that the tact switch 123 is switched by the pressing of the button 122.

The button 122 is supported elastically at one side of the main body 1. To this end, a restoring spring 124 is installed in the main body to elastically restore the pressed button 122 in the outward direction of the main body.

The main body 1 may include therein a control box 99A that is equipped with a variety of electronic components for controlling the indoor unit, particularly, the blower motors 44 and 64, the motors 54 and 75, etc.

If the indoor unit of the air conditioner is equipped with an LCD panel, it may be equipped with an LCD control box 99B that is equipped with a variety of electronic components for controlling the LCD panel.

Fig. 4 is a perspective view illustrating a situation where the filer 10 is automatically drawn from an indoor unit of an air conditioner according to an embodiment of the present invention.

Referring to Fig. 4, when the filter locking filter unit 120 is driven, the filter 10 is automatically drawn from the indoor unit through the side air inlet 4.

Since foreign substances such as dust are accumulated in the filter 10, the filter 10 must be cleaned or replaced periodically.

Hereinafter, a description is made of a structure for drawing out the filter 10 automatically to facilitate the cleaning of the filter 10.

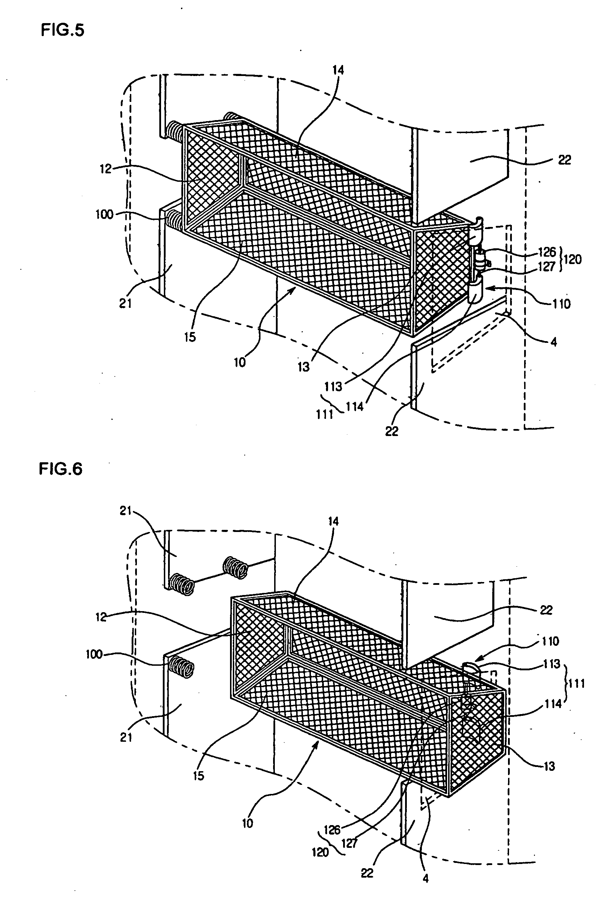

Fig. 5 is a perspective view illustrating a situation where the filter is locked by the filter locking unit according to a first embodiment of the present invention. Fig. 6 is a perspective view illustrating a situation where the filter is unlocked by the filter locking unit of Fig. 5.

Referring to Figs. 5 and 6, the filter locker 111 may be provided in singularity or in plurality.

A top filter locker 113 is configured to lock/unlock the top of the filter 10, and a bottom filter locker 113 is used to lock/unlock the bottom of the filter 10.

The motor 126 is configured to rotate the bottom filter locker 113 and the bottom filter locker 114 that are connected to the rotation axis of the motor 126.

The motor 126 can rotate the filter locker 111 to release the locking of the filter 10.

When the filter locker 111 is rotated to be in parallel to the filter drawing direction as illustrated in Fig. 6, the filter 10 is no longer locked by the filter locker 111.

The spring (i.e., the filter pressing member 100) is extended to push the filter 10 rightwards, and the filter 10 is slid and drawn toward the right air inlet 4 while being guided by the fitter guide 95.

When it is desired that the drawn-out filter 10 is again installed into the main body 1, the filter 10 located at the right of the right air inlet 4 is pushed into the right air inlet 4, whereby the filter 10 is inserted deeply into the main body 1 while being guided by the filter guide 95.

When inserted deeply into the main body 1, the filter 10 compresses the spring (i.e., the filter pressing member 100). The filter locker 111 is again rotated to lock the filter 10.

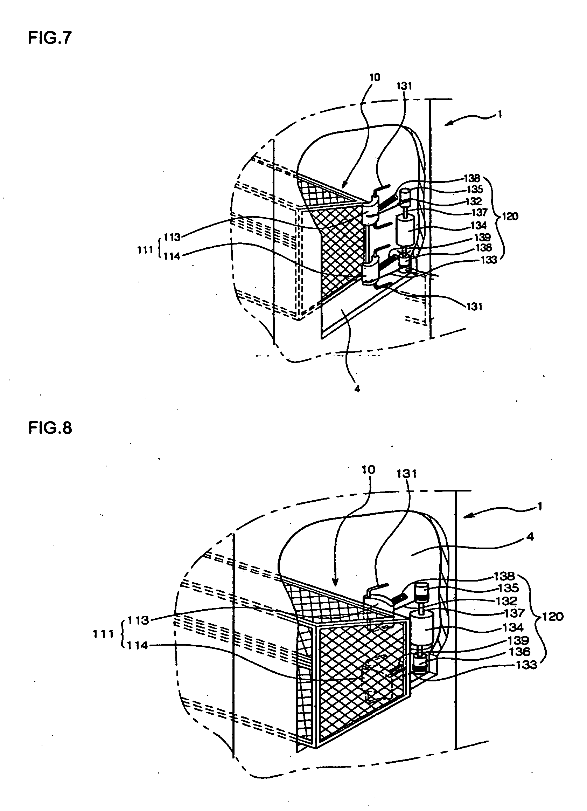

Fig. 7 is a perspective view illustrating a situation where the filter is locked by the filter locking unit according to a second embodiment of the present invention. Fig. 8 is a perspective view illustrating a situation where the filter is unlocked by the filter locking unit of Fig. 7.

Referring to Figs. 7 and 8, the filter locker 111 is rotatably installed at the main body 1.

A filter locker driving unit 120 may include pulling members 132 and 133 that are connected to the filter locker 111 to rotate the filter locker 111 to the locking release location, a motor 134 for rotating the pulling members 132 and 133 in the drawing direction of the filter 10, and lock springs 138 and 139 for pressing the filter locker 111 such that filter locker 111 is rotated to lock the filter 10.

The pulling members 132 and 133 may be a wire or a link that has one end connected to the filter locker 111 and the other end connected to the motor 134.

If the pulling member is a wire, the motor 134 and drums 135 and 136 wound with the wire are connected by a rotation axis 137.

The lock springs 138 and 139 are installed to push the filter locker 111 vertically to the filter drawing direction.

The filter locker 111 is rotatably supported by a filter locker support 131.

In a locking release mode, the motor is rotated such that the pulling members 132 and 133 (e.g., wires) are wound around the drums 135 and 136. As a result, the filter locker 111 is pulled by the pulling members 132 and 133 and is rotated to be in parallel to the filter drawing direction while compressing the lock springs 138 and 139.

When the filter locker 111 is rotated to be in parallel to the filter drawing direction, the filter pressing member 100 pushes the filter 10 rightwards, so that the filter 10 is drawn out simply and rapidly.

When the drawn-out filter 10 is inserted deeply into the main body 1 in the same manner as in the first embodiment, it can be inserted and fixed into the main body 1 simply and rapidly.

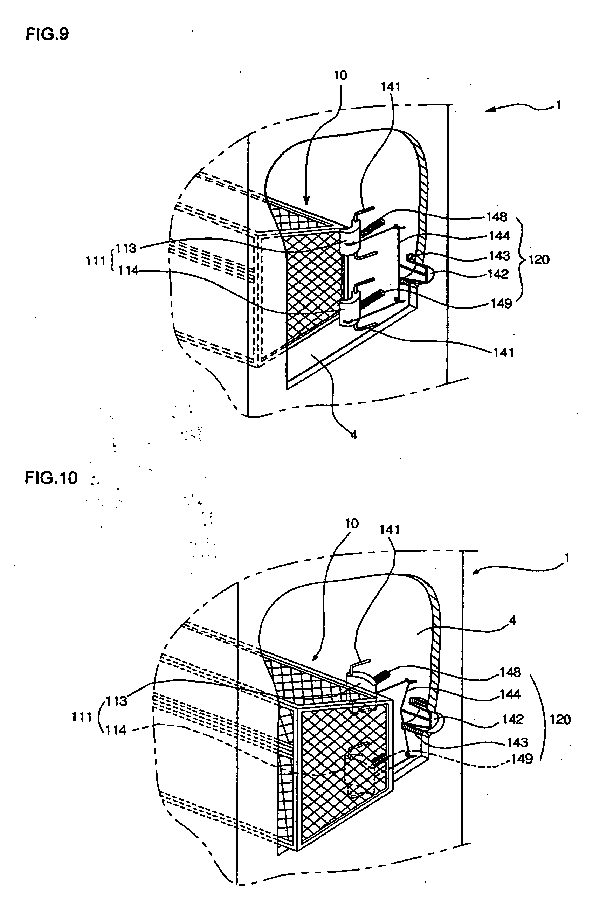

Fig. 9 is a perspective view illustrating a situation where the filter is locked by the filter locking unit according to a third embodiment of the present invention. Fig. 10 is a perspective view illustrating a situation where the filter is unlocked by the filter locking unit of Fig. 9.

Referring to Figs. 9 and 10, a filter locker 111 is rotatably installed at the main body 1.

A filter locker driving unit 120 may be constructed to include a button 142, a pulling member 144 that are connected to the filter locker 111 to rotate the filter locker 111 to be in parallel to the filter drawing direction so that the filter locker 111 can be rotated to the locking release location by the pressing of the button 142, and lock springs 148 and 149 for pressing the filter locker 111 such that filter locker 111 is rotated to lock the filter 10.

The button 142 may have one end that is directly connected to the pulling member 144.

The button 142 is elastically supported at one side of the main body 1, and a restoring spring 143 is installed at the main body 1 to elastically restore the pressed button 142 in the outward direction of the main body 1.

The pulling member 144 may be a wire or a link that has one end connected to the filter locker 111 and the other end connected to the button 142.

The filter locker 111 is rotatably supported by a filter locker support 141.

When the button 142 is pressed, the pulling member 144 is pressed by the button 142 to pull the filter locker 111 such that the filter locker 111 is rotated to be in parallel to the filter drawing direction.

When the filter locker 111 is rotated to be in parallel to the filter drawing direction, the filter pressing member pushes the filter 10 rightwards, so that the filter 10 is drawn out simply and rapidly.

That is, the filter 10 can be drawn from the main body 1 rapidly and simply by the pressing of the button 142.

When the filter 10 is pushed into the main body 1 while pressing the button, it is inserted and fixed into the main body 1 rapidly and simply.

As described above, the supporting of the heat exchanger and the collecting of the condensed water can be implemented in one simplified structure, thereby making it possible to reduce the fabrication cost of the indoor unit.

In addition, the filter of the indoor unit can be drawn out automatically, thereby making it possible to replace and install the filter easily and rapidly.

It will be apparent to those skilled in the art that various modifications and variations can be made in the present invention. Thus, it is intended that the present invention covers the modifications and variations of this invention provided they come within the scope of the appended claims.

## Claims

1. An indoor unit of an air conditioner comprising a main body (1) including one or more air inlets (2,3,4) and one or more air outlets (5,6) formed thereat, a filter (10) disposed in the main body to purify air introduced through the air inlet, a heat exchanger (80,90) disposed in the main body, and a support part (20C,20D) supporting the bottom of the heat exchanger and collecting condensed water falling from the heat exchanger, **characterized in that** a filter guide (95) extends in a horizontal direction to support and guide the filter to be drawn out of the side surface of the main body, wherein at least a portion of the filter guide is integrally formed with the support part.

2. The indoor unit according to claim 1, further comprising a driving unit (120) enabling the filter to be drawn out automatically.

3. The indoor unit according to claim 1, further comprising:
a pressing member (100) for pressing the filter to be drawn out; and
a locking unit (110) for interrupting/releasing the drawing of the filter.

4. The indoor unit according to claim 3, wherein the pressing member is a spring.

5. The indoor unit according to claim 1, further comprising:
a filter locker (111) for locking/unlocking the filter; and
a driving unit (120) for driving the filter locker.

6. The indoor unit according to claim 5, wherein the filter locker is installed to be rotatable in the same direction as the drawing direction of the filter.

7. The indoor unit according to claim 5, wherein the filter locker is pivoted by a driving motor (126) or by a pressing operation of a button member (122).

8. The indoor unit according to claim 1, wherein at least a portion of the rear part of the filter is supported and guided to be drawn in and out by the support part.

9. The indoor unit according to claim 1, the filter guide includes:
a rear guide (95A,95B) extending from the support part to support the rear of the filter; and
a front guide (95C,95D) extending inside the main body to guide the front of the filter.

10. The indoor unit according to claim 1, wherein the heat exchanger is provided in plurality at an upper and lower position of the filter.

## Patentansprüche

1. Innenraumeinheit einer Klimaanlage, umfassend einen Hauptkörper (1), welcher einen oder mehrere Lufteinlässe (2, 3, 4) und einen oder mehrere Luftauslässe (5, 6), die daran gebildet sind, umfasst, einen Filter (10), welcher in dem Hauptkörper angeordnet ist, um durch den Lufteinlass eingeführte Luft zu reinigen, einen Wärmetauscher (80, 90), der in dem Hauptkörper angeordnet ist, und ein Unterstützungsteil (20C, 20D), das den Boden des Wärmetauschers unterstützt und von dem Wärmetauscher fallendes Wasser sammelt, **dadurch gekennzeichnet, dass** sich eine Filterführung (95) in einer horizontalen Richtung erstreckt, um den Filter zu unterstützen und zu führen, um ihn von der Seitenfläche des Hauptkörpers herauszuziehen, wobei wenigstens ein Abschnitt der Filterführung integral mit dem Unterstützungsteil gebildet ist.

2. Innenraumeinheit nach Anspruch 1, ferner umfassend eine Antriebseinheit (120), welche es ermöglicht, dass der Filter automatisch herausgezogen wird.

3. Innenraumeinheit nach Anspruch 1, ferner umfassend:
- ein Druckelement (100) zum Drücken des herauszuziehenden Filters; und
- eine Sperreinheit (110) zum Unterbrechen/Lösen des Ziehens des Filters.

4. Innenraumeinheit nach Anspruch 3, wobei das Druckelement eine Feder ist.

5. Innenraumeinheit nach Anspruch 1, ferner umfassend:
- eine Filtersperrvorrichtung (111) zum Sperren/Entsperren des Filters; und
- eine Antriebseinheit (120) zum Antreiben der Filtersperrvorrichtung.

6. Innenraumeinheit nach Anspruch 5, wobei die Filtersperrvorrichtung installiert ist, um in die gleiche Richtung wie die Ziehrichtung des Filters drehbar zu sein.

7. Innenraumeinheit nach Anspruch 5, wobei die Filtersperrvorrichtung von einem Antriebsmotor (126) oder von einer Druckbetätigung eines Knopfelements (122) geschwenkt wird.

8. Innenraumeinheit nach Anspruch 1, wobei wenigstens ein Abschnitt des hinteren Teils des Filters unterstützt und geführt wird, um von dem Unterstützungsteil hinein- und herausgezogen zu werden.

9. Innenraumeinheit nach Anspruch 1, wobei die Filterführung umfasst:
- eine hintere Führung (95A, 95B), die sich von dem Unterstützungsteil erstreckt, um die Hinterseite des Filters zu unterstützen; und
- eine vordere Führung (95C, 95D), die sich im Inneren des Hauptkörpers erstreckt, um die Vorderseite des Filters zu führen.

10. Innenraumeinheit nach Anspruch 1, wobei der Wärmetauscher in Mehrzahl an einer oberen und unteren Position des Filters bereitgestellt ist.

## Revendications

1. Unité d'intérieur d'un climatiseur comprenant un corps principal (1) comportant une ou plusieurs entrées d'air (2, 3, 4) et une ou plusieurs sorties d'air (5, 6) formées à celui-ci, un filtre (10) disposé dans le corps principal pour purifier l'air introduit à travers l'entrée d'air, un échangeur de chaleur (80, 90) disposé dans le corps principal, et une partie de support (20C, 20D) supportant le fond de l'échangeur de chaleur et recueillant l'eau de condensation tombant de l'échangeur de chaleur, **caractérisée en ce qu'**un guide-filtre (95) s'étend dans une direction horizontale pour supporter et guider le filtre à retirer de la surface latérale du corps principal, où au moins une portion du guide-filtre est réalisée intégralement avec la partie de support.

2. Unité d'intérieur selon la revendication 1, comprenant en outre une unité d'entraînement (120) permettant le retrait automatique du filtre.

3. Unité d'intérieur selon la revendication 1, comprenant en outre:
un élément de pression (100) pour presser le filtre à extraire; et
une unité de verrouillage (110) pour interrompre/libérer le retrait du filtre.

4. Unité d'intérieur selon la revendication 3, dans laquelle l'élément de pression est un ressort.

5. Unité d'intérieur selon la revendication 1, comprenant en outre:
un organe de verrouillage de filtre (111) pour verrouiller/déverrouiller le filtre; et
une unité d'entraînement (120) pour entraîner l'organe de verrouillage de filtre.

6. Unité d'intérieur selon la revendication 5, dans laquelle l'organe de verrouillage de filtre est installé pour pouvoir tourner dans la même direction que la direction d'extraction du filtre.

7. Unité d'intérieur selon la revendication 5, dans laquelle l'organe de verrouillage du filtre est amené à pivoter par un moteur d'entraînement(126) ou par une opération d'appui sur un élément formant bouton (122).

8. Unité d'intérieur selon la revendication 1, dans laquelle au moins une portion de la partie arrière du filtre est supportée et guidée pour être rentrée et extraite par la partie de support.

9. Unité d'intérieur selon la revendication 1, le guide-filtre comporte:
un guide arrière (95A, 95B) s'étendant de la partie de support pour supporter l'arrière du filtre; et
un guide avant (95C, 95D) s'étendant à l'intérieur du corps principal pour guider l'avant du filtre.

10. Unité d'intérieur selon la revendication 1, dans laquelle l'échangeur de chaleur est réalisé en une pluralité à une position supérieure et inférieure du filtre.
